# EUROPÄISCHE PATENTSCHRIFT

(11) **EP 2 614 457 B1**
(45) Veröffentlichungstag und Bekanntmachung des Hinweises auf die Patenterteilung: **13.06.2018**
(21) Anmeldenummer: 11754625.9
(22) Anmeldetag: 08.09.2011
(51) Int. Cl.: G06F 21/71, G06F 21/78, G06F 21/86, H04L 9/00, G06F 21/75, G06K 19/073

(54) **PORTABLER DATENTRÄGER MIT FEHIBEDIENUNGSZÄHLER**
PORTABLE DATA CARRIER WITH OPERATING ERROR COUNTER
SUPPORT DE DONNÉES PORTATIF PRÉSENTANT UN COMPTEUR DES ERREURS D'UTILISATION

(30) Priorität: 08.09.2010 DE 102010044687
(43) Veröffentlichungstag der Anmeldung: 17.07.2013
(73) Patentinhaber: Giesecke+Devrient Mobile Security GmbH, 81677 München (DE)
(72) Erfinder: GIBIS, Oliver, 81825 München (DE)
(86) Internationale Anmeldenummer: PCT/EP2011/004530
(87) Internationale Veröffentlichungsnummer: WO 2012/031761

(56) Entgegenhaltungen:
- EP-A1- 1 056 058
- EP-A2- 0 574 219
- DE-A1- 4 321 849
- DE-A1- 19 548 903
- DE-A1- 19 818 830
- DE-A1- 19 939 280
- Wolfgang Rankl; Wolfgang Effing: "Handbuch der Chipkarten", 1999, Hanser, XP002663033, Seiten 502-504, Seite 504
- WEINGART S H ED - KOC C K ET AL: "PHYSICAL SECURITY DEVICES FOR COMPUTER SUBSYSTEMS: A SURVEY OF ATTACKS AND DEFENSES", CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS; [LECTURE NOTES IN COMPUTER SCIENCE], BERLIN : SPRINGER, DE, Bd. VOL. 1965, 17. August 2000 (2000-08-17), Seiten 302-317, XP001049140, ISBN: 978-3-540-41455-1

## Beschreibung

Die vorliegende Erfindung betrifft einen portablen Datenträger mit einem Fehlbedienungszähler sowie ein Verfahren zum Sichern eines Kommandos in dem Datenträger mittels eines Fehlbedienungszählers.

Fehlbedienungszähler werden im Zusammenhang mit portablen Datenträgern, beispielsweise Chipkarten, dazu eingesetzt, das unbefugte Durchführen sicherheitsrelevanter Kommandos mit dem Ziel der Erlangung sicherheitsrelevanter Daten des Datenträgers zu begrenzen. Dabei ist es beispielsweise bekannt, die Anzahl aufeinander folgender falscher Eingaben zu beschränken. Wird diese Anzahl überschritten, wird der Datenträger gesperrt. Mittels eines Fehlbedienungszählers können auch Angriffe anderer Art auf beliebige, auf dem Datenträger ausgeführte Kommandos erkannt werden. Wird beispielsweise eine durch ein Kommando ausgeführte Berechnung durch eine externe Einwirkung auf den Datenträger gestört mit dem Ziel, anhand des gestörten Ergebnisses an der Berechnung beteiligte geheime Daten auszuspähen, so kann dies datenträgerintern dadurch erkannt werden, dass die Berechnung, bevor ein Ergebnis ausgegeben wird, wiederholt wird. Die Ausgabe eines Berechnungsergebnisses erfolgt nur dann, wenn beide Berechnungen zu einem identischen Ergebnis kommen. Andernfalls kann von einem Angriff auf eine der Berechnungen ausgegangen werden und ein entsprechender Fehlbedienungszähler vermerkt diesen Angriff.

Ein Angreifer, welcher einen vorstehend beschriebenen Angriff auf ein Kommando eines beispielsweise gestohlenen Datenträgers ausführt, kann allerdings anhand einer Analyse von bestimmten Datenträgerparametern, beispielsweise anhand des Stromverbrauchs, erkennen, ob der Vergleich der beiden Berechnungsergebnisse Gleichheit ergibt oder nicht. Damit hat der Angreifer die Möglichkeit, den Datenträger durch Unterbrechung der Stromversorgung zu deaktivieren, bevor der Fehlbedienungszähler den Angriff vermerken kann. Auf diese Weise kann der Angreifer den Fehlbedienungszähler gleichsam außer Kraft setzen und den Angriff beliebig oft durchführen.

Aus diesem Grund ist dazu übergegangen worden, einen Fehlbedienungszähler bereits vor dem Ausführen des sicherheitsrelevanten Kommandos, ausgehend von einem vorgegebenen positiven Startwert, zu dekrementieren und lediglich dann zu inkrementieren, wenn das Kommando ohne Unterbrechung ausgeführt worden ist. Auf diese Weise kann ein vorstehend beschriebener Angriff von dem Fehlbedienungszähler sicher erkannt werden, da bei einer Unterbrechung der Stromversorgung noch während der Durchführung des Kommandos ein Inkrementieren des Zählers nicht mehr stattfindet. Beim nächsten Aufruf des Kommandos ist der Stand des Fehlbedienungszählers dementsprechend um eins verringert. Wenn vorgesehen wird, dass das Kommando in dem Datenträger lediglich dann ausgeführt wird, solange der Fehlbedienungszähler einen positiven Wert aufweist, ist die Anzahl der Angriffe auf das Kommando durch den Startwert des Fehlbedienungszählers beschränkt. Ein extensives Angreifen des Kommandos ist auf diese Weise sicher zu verhindern.

Aus DE 195 48 903 A1 (ORGA KARTENSYSTEME GMBH [DE]) 29. August 1996 ist ein Verfahren zur Sicherung des Fehlbedienungszählers bekannt, dass mit Zwischenspeicherung arbeitet. Aber auch diese Art des Fehlbedienungszählers hat Nachteile. Wird der Zähler anfangs, d.h. gewöhnlich während der Herstellung des Datenträgers, in der Initialisierungs- oder Personalisierungsphase, zu hoch eingestellt, bleibt das Risiko, dass dem Angreifer ein Angriff zumindest mit einer gewissen, nicht zu vernachlässigenden Wahrscheinlichkeit gelingt. Die Sicherheit des Datenträgers wird dadurch herabgesetzt. Wird der Startwert auf der anderen Seite zu niedrig eingestellt, so besteht die Gefahr, dass der Zähler im Laufe der Betriebszeit des Datenträgers durch gelegentliche Fehlbedienungen eines berechtigten Nutzers oder durch technische Störungen, welche beispielsweise eine Unterbrechung der Stromversorgung während der Ausführung des Kommandos bewirken, unter den zulässigen Mindestwert fällt und der Datenträger - ohne dass ein Angriff stattgefunden hat - deaktiviert wird. Die Zuverlässigkeit und dauerhafte Bedienbarkeit des Datenträgers leidet darunter.

Aufgabe der vorliegenden Erfindung ist es, ein Verfahren zum Sichern eines Datenträgers mittels eines Fehlbedienungszählers vorzuschlagen, welches hohe Sicherheit des Datenträgers mit einer zuverlässigen und dauerhaften Bedienbarkeit desselben vereint.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Bei einem erfindungsgemäßen Verfahren in einem portablen Datenträger zum Sichern des Datenträgers gegen externe Angriffe auf den Datenträger wird zumindest ein Zähler in dem Datenträger verwendet. Ein vorgegebenes Kommando wird dabei derart gesichert, dass es durch den Datenträger nur dann ausgeführt wird, wenn der zumindest eine Zähler in einem vorgegebenen, zulässigen Wertebereich liegt, insbesondere einen vorgegebenen Minimalwert nicht unterschreitet. Der zumindest eine Zähler wird vor einer Ausführung des Kommandos dekrementiert und lediglich dann inkrementiert, wenn das Kommando ohne Unterbrechung ausgeführt worden ist. Erfindungsgemäß wird der zumindest eine Zähler auch noch nach der Ausgabe des Datenträgers an einen Nutzer eingestellt. D.h. neben der erstmaligen Einstellung des Zählers bei der Herstellung des Datenträgers besteht die Möglichkeit der erneuten Einstellung des Zählers, wenn der Datenträger bereits in Betrieb genommen worden ist. Im Rahmen der vorliegenden Erfindung bezeichnet ein Einstellen des Zählers sowohl ein Einstellen eines Wertes des Zählers als auch ein Einstellen eines zulässigen Wertebereichs des Zählers sowie eines zulässigen Verlaufsmusters des Zählers.

Es versteht sich von selbst, dass der Zähler analog zu der vorgenannten ersten Variante gemäß einer zweiten Variante auch derart eingerichtet sein kann, dass das vorgegebene Kommando nur dann ausgeführt wird, wenn der zumindest eine Zähler den vorgegebenen Wertebereich nicht nach oben verlässt, also einen vorgegebenen Maximalwert nicht überschreitet. Dabei wird der zumindest eine Zähler dann vor der Ausführung des Kommandos inkrementiert und lediglich dann dekrementiert, wenn das Kommando ohne Unterbrechung ausgeführt worden ist. Aus Gründen der Einfachheit und Verständlichkeit wird in der Beschreibung und den Ansprüchen lediglich auf die erstgenannte der beiden Varianten Bezug genommen, welche funktional vollständig äquivalent zu der zweiten Variante ist.

Ein erfindungsgemäßer portabler Datenträger umfasst demnach zumindest einen Speicher und einen Prozessor, welcher eingerichtet ist, ein in dem Speicher gespeichertes Kommando auszuführen, sowie zumindest einen Zähler zum Sichern des Kommandos. Der Datenträger ist dabei eingerichtet, das Kommando nur dann auszuführen, wenn der zumindest eine Zähler einen vorgegebenen Wert nicht unterschreitet. Weiter ist der Datenträger eingerichtet, den zumindest einen Zähler vor einer Ausführung des Kommandos zu dekrementieren und lediglich dann zu inkrementieren, wenn das Kommando ohne Unterbrechung ausgeführt worden ist. Erfindungsgemäß ist der zumindest eine Zähler eingerichtet, auch noch nach der Ausgabe des Datenträgers an einen Nutzer einstellbar zu sein.

Auf diese Weise ist es möglich, einer autorisierten Stelle jederzeit eine Einstellung des Zählers zu ermöglichen. Dies gilt insbesondere auch dann noch, wenn der Datenträger bereits in Benutzung ist. Es wird dadurch möglich, den Zähler einerseits zum Ausgabezeitpunkt mit einem recht niedrigen Startwert an den Nutzer auszugeben. Dadurch ist eine hohe Sicherheit des Datenträgers und der darauf ausführbaren Kommandos gewährleistet. Dies gilt insbesondere dann, wenn der Datenträger dem Nutzer abhanden kommen sollte, beispielsweise durch Diebstahl. Auf der anderen Seite wird es möglich, den Zähler nach einiger Zeit, wenn er aufgrund versehentlicher Fehlbedienung durch einen berechtigten Nutzer oder aufgrund technischer Pannen, ausgehend vom Startwert, bereits vermindert worden ist, mittels einer geeigneten Einstellung wieder anzuheben, beispielsweise auf den ursprünglichen Startwert. So kann eine nicht beabsichtigte Sperrung des Datenträgers verhindert werden. Dies ist dann sinnvoll, wenn sich die Anzahl der irrtümlichen, berechtigten Fehlbedienungen und technischen Defekte, welche zu einer Dekrementierung des Zähler geführt haben, im Laufe der Verwendung des Datenträgers zu einer Zahl aufsummiert haben, welche den Wert des Startwerts erreichen würde. Somit kann mittels der erfindungsgemäßen, mehrfachen Einstellung des Zählers die Sperrung des Datenträgers verhindert werden. Die Bedienbarkeit und Zuverlässigkeit der Verwendung des Datenträgers wird dadurch verbessert, ohne die Sicherheit einzuschränken.

Der Zähler kann zu jedem Zeitpunkt des Lebenszyklus des Datenträgers so niedrig gehalten werden, dass ein Angriff von nicht autorisierter Stelle auf ein vorgegebenes Kommando nur in äußerst begrenztem Umfang möglich ist. Gleichzeitig kann es vermieden werden, dass der Datenträger durch gelegentliche, irrtümliche oder technisch bedingte Fehlbedienung gesperrt wird. Ein Zähler, der aus solchen Gründen dekrementiert wird, kann neu und geeignet auch noch nach der Herstellung des Datenträgers eingestellt werden, d.h. auch wenn der Datenträger bereits an den Nutzer ausgegeben worden ist und gegebenenfalls seit einiger Zeit in Betrieb ist.

Als autorisierte Stellen, welche zu einer Einstellung des Zählers berechtigt sind, kommen mehrere Instanzen in Frage. Eine solche Einstellung kann beispielsweise dem Nutzer des Datenträgers erlaubt sein. Auch eine den Datenträger ausgebende Stelle kann eine Einstellung des Zählers vornehmen. Schließlich kann diese Einstellung ebenfalls durch den Datenträger selbst vorgenommen werden. Weiterhin können die Voraussetzungen, welche erfüllt sein müssen, damit die betreffende Instanz eine Einstellung vornehmen kann, variieren. Schließlich kann der Wert, auf den der Zähler bei der Einstellung eingestellt wird bzw. der zulässige Wertebereich oder der zulässige Verlauf des Zählers, einerseits frei vorgegeben werden. Andererseits können die neu eingestellten Werte des Zählers von externen Vorgaben oder einem vorhergegangenen Verlauf des Zählerstandes abhängen. Verschiedene Aspekte bevorzugter Ausführungsformen des erfindungsgemäßen Verfahrens werden im Folgenden beschrieben. Es ist hervorzuheben, dass diese Aspekte, wenn sie sich nicht technisch ausschließen, jeweils frei miteinander kombiniert werden können, ohne dass jede mögliche Kombination solcher Aspekte explizit beschrieben werden müsste.

Gemäß einem ersten Aspekt kann der zumindest eine Zähler nach einer erfolgreichen Authentisierung gegenüber dem Datenträger eingestellt werden. Nur dann, wenn für den Datenträger zweifelsfrei feststellbar ist, dass die Einstellung des Zählers auf Antrag eines berechtigten und authentifizierbaren Nutzers oder auf Antrag einer sonstigen berechtigten und authentifizierbaren Stelle vorgenommen werden soll, wird sie seitens des Datenträgers ermöglicht. Der Nutzer kann sich dabei gegenüber dem Datenträger authentisieren, beispielsweise durch Eingabe eines Geheimdatums. Eine solche Authentisierung kann "offline" geschehen, d.h. ohne dass der Datenträger mit einer Datenverarbeitungseinrichtung verbunden wird, welche die Authentisierung prüft. Es ist allerdings möglich, dass der Datenträger, falls dieser selbst nicht über Eingabemittel, beispielsweise eine Tastatur oder dergleichen verfügt, mit einer geeigneten Schnittstelle verbunden wird, um eine Eingabe eines Geheimdatums zu ermöglichen, z.B. einem Chipkartenterminal.

Alternativ oder zusätzlich kann sich der Nutzer auch gegenüber einer den Datenträger ausgebenden Stelle authentisieren. Dies kann beispielsweise eine Bank oder ein Mobilfunkprovider sein. Dabei kann es vorgesehen sein, dass der Nutzer unter Verwendung des Datenträgers eine Kommunikationsverbindung mit der ausgebenden Stelle aufbaut und sich im Rahmen dieser Datenkommunikation authentisiert. Die Authentisierung erfolgt also "online". Diese Authentisierung verlangt ebenfalls einen Beleg des Nutzers bezüglich seiner Berechtigung. Der Datenträger alleine ist dazu nicht ausreichend. Der Nutzer kann sich beispielsweise mittels eines Geheimdatums, eines biometrischen Merkmals, durch den Besitz eines von dem Datenträger verschiedenen weiteren Datenträgers oder ähnlichen bekannten Mitteln gegenüber der ausgebenden Stelle ausweisen.

Eine Authentisierung einer den Datenträger ausgebenden Stelle gegenüber dem Datenträger erfolgt in bekannter Weise, wenn der Datenträger über ein geeignetes Lesegerät, beispielsweise mittels eines Chipkartenterminals, "online" mit der ausgebenden Stelle verbunden wird. Eine solche Authentisierung kann beispielsweise mittels Austauschens so genannter Kryptogramme, verschlüsselter Datenpakete, erfolgen. Anhand dieser Kryptogramme kann der Datenträger die ausgebende Stelle authentifizieren.

Ein zweiter Aspekt betrifft die Instanz, welche die Einstellung des zumindest einen Zählers vornimmt. Eine solche Einstellung kann in der Regel nach erfolgreicher Authentisierung erfolgen. Diese Einstellung kann einerseits die den Datenträger ausgebenden Stelle vornehmen, beispielsweise falls sie an der Authentisierung beteiligt war. Auf diese Weise kann die Stelle stets den Zählerstand ausgegebener Datenträger kontrollieren und geeignet verwalten. Sicherheit und Bedienbarkeit des Datenträgers können von der ausgebenden Stelle auch noch während des Betriebs des Datenträgers "im Feld" gewährleistet werden. So kann die ausgebende Stelle beispielsweise immer dann, wenn der Nutzer mit dem Datenträger "online" geht, also sich mit der ausgebenden Stelle über eine Datenkommunikationsverbindung verbindet, den Stand des Zählers prüfen und gegebenenfalls neu einstellen.

Alternativ kann eine Einstellung des zumindest einen Zählers, vorzugsweise nach erfolgreicher Authentisierung des Nutzers gegenüber dem Datenträger oder der ausgebenden Stelle, auch durch den Nutzer selbst erfolgen. Auf dieser Weise kann dieser mit der Einstellung des Zählers seine eigenen Sicherheitsbedürfnisse definieren. Es ist möglich, dass die Einstellungsmöglichkeiten des Nutzers dahingehend eingeschränkt sind, dass Einstellungen des Nutzers nur insoweit möglich sind, als dass die Sicherheit des Datenträgers immer gewährleistet ist. D.h. beispielsweise, dass der Startwert des Zählers einen vorgegebenen Wert nicht übersteigen darf, um einem potentiellen Angreifer nicht zu viele Angriffe auf ein sicherheitsrelevantes Kommando zu erlauben.

Schließlich ist es möglich, dass der Datenträger selbst die Einstellung des zumindest einen Zählers vornimmt. Dies kann beispielsweise dann geschehen, wenn sich der Nutzer gegenüber dem Datenträger erfolgreich authentisiert hat. Diese Einstellung kann für den Nutzer transparent bleiben, d.h. dieser bemerkt von der Einstellung überhaupt nichts. Eine solche Einstellung, beispielsweise jeweils auf den ursprünglichen Startwert, stellt die Sicherheit des Datenträgers und Fehlertoleranz für den Benutzer bei normaler Bedienung, inklusive gelegentlicher Fehlbedienungen, sicher.

Gemäß einem weiteren Aspekt ist in dem Datenträger eine Mehrzahl von Zählern vorgesehen. Dabei wird ein erster Zähler zum Sichern eines ersten Kommandos verwendet und ein zweiter, von dem ersten Zähler verschiedener Zähler wird zum Sichern eines zweiten, in der Regel von dem ersten Kommando verschiedenen zweiten Kommandos, verwendet. Die Anzahl der Zähler kann variieren. Jeder der Zähler ist separat, wie vorstehend beschrieben, einstellbar. Auf diese Weise können verschiedene Kommandos in angemessener Weise verschieden gesichert werden. Es ist möglich, dass bei einem Kommando die Wahrscheinlichkeit einer irrtümlichen Fehlbedienung höher ist als bei einem anderen Kommando. Folglich sollte der zugeordnete Zähler öfter neu eingestellt werden, um eine nicht beabsichtigte Sperrung des Datenträgers - oder zumindest des Kommandos auf dem Datenträger - zu vermeiden. Auch ist es möglich, dass ein Kommando öfter aufgrund technischer Gegebenheiten gestört wird als ein anderes Kommando. Auch in diesem Fall ist es vorteilhaft, die entsprechenden Zähler geeignet gesondert zu behandeln. Entsprechend ist es sinnvoll, die Zähler, welche die entsprechenden Kommandos sichern, separat einstellbar zu gestalten. Auf diese Weise kann jedes einzelne Kommando auf dem Datenträger mittels eines eigens diesem Kommando zugeordneten und separat einstellbaren Zählers optimal gesichert werden.

Dies ist besonders dann vorteilhaft, wenn der erste Zähler ein Kommando sichert, welches in einem ersten Betriebsmodus des Datenträgers ausgeführt wird, während der zweite Zähler ein Kommando sichert, welches in einem zweiten Betriebsmodus des Datenträgers ausgeführt wird. Als erster Betriebsmodus kommt beispielsweise ein kontaktbehafteter Betriebsmodus in Frage, als zweiter Betriebsmodus beispielsweise ein kontaktloser Betriebsmodus. Wenn also der Datenträger eingerichtet ist, sowohl kontaktbehaftet als auch kontaktlos betrieben zu werden, können verschiedene Zähler, welche jeweils den verschiedenen Betriebsmodi zugeordnet sind, vorteilhaft eingesetzt werden. Derjenige Zähler, welcher ein Kommando im zweiten Betriebsmodus sichert, wird in der Regel jeweils höher und öfter neu eingestellt. Dies liegt daran, dass technisch bedingt in diesem Betriebsmodus die Stromversorgung des Datenträgers gelegentlich unterbrochen wird - mit der Folge einer Dekrementierung des Zählers, falls das entsprechende Kommando dadurch unterbrochen worden ist. Der Zähler, der einem Kommando im hinsichtlich der Stromversorgung des Datenträgers stabileren ersten Betriebsmodus zugeordnet ist, wird in der Regel niedriger und weniger oft neu eingestellt werden. In beiden Fällen kann sowohl Sicherheit des Datenträgers als auch zuverlässige Bedienbarkeit gewährleistet werden, wobei gleichzeitig die technischen Gegebenheiten der beiden Betriebsmodi mit beachtet werden.

Schließlich können die verschiedenen Zähler, welche den verschiedenen Kommandos zugeordnet sind, auch dahingehend separat eingestellt werden, dass das eine Kommando bereits bei einer geringen Anzahl von Angriffen gefährdet ist, einem Angreifer sensible Daten zu liefern, während das andere Kommando in dieser Hinsicht robuster ist.

Ein weiterer Aspekt betrifft die konkrete Einstellung des zumindest einen Zählers. Zum einen wird darunter einfach der Wert verstanden, auf den der Zähler bei der erfindungsgemäßen Einstellung gesetzt wird. Dies kann beispielsweise der Wert sein, auf den der Zähler bei der Herstellung des Datenträgers ursprünglich gesetzt worden ist. Vom diesem neu eingestellten Startwert erfolgt dann die beschriebene Dekrementierung und Inkrementierung des Zählers. Es ist aber auch möglich, dass der Zähler bei verschiedenen Einstellungen auf jeweils einen anderen, neuen Startwert, welcher von vorhergehenden Startwerten abweicht, eingestellt wird. Dabei kann der vergangene Verlauf des Zählers in die Bestimmung des einzustellenden Startwertes eingehen.

Der Aspekt der Einstellung des zumindest einen Zählers betrifft aber auch komplexere Zusammenhänge. Es werden bei der Einstellung des Zählers in diesem komplexeren Sinn Vorgaben gemacht, welche den zulässigen Verlauf des Zählers, insbesondere bezogen auf ein Zeitintervall, definieren. Wie erwähnt, betrifft ein Einstellen des zumindest einen Zählers auch das Vorgeben eines zulässigen Wertbereichs, welchen der Zähler nicht verlassen darf, ohne dass der Datenträger oder das gesicherte Kommando deaktiviert wird. Gleiches gilt allgemein für ein zulässiges Verlaufsmuster des Zählers. Gemäß diesem Aspekt kann ein zulässiger Bereich noch mit einer Vorgabe versehen werden, welche ein Zeitintervall betrifft, innerhalb dessen der Wertebereich nicht verlassen werden darf. Es wird somit möglich, parallel mehrere zulässige Wertebereiche zu definieren. Dabei ist es möglich, dass das Verlassen eines der Wertebereiche innerhalb eines kurzen vorgegebenen Zeitintervalls, z.B. einer Stunde, zu einer Deaktivierung des Datenträger führen würde, während, wenn der Zähler diesen Wertebereich beispielsweise erst nach mehreren Monaten verließe, dies als unkritisch angesehen werden würde. Allgemein formuliert geben diese Einstellungen für jeweils eine gegebene Zeitspanne ein zulässiges Verhältnis von Dekrementierungen des zumindest einen Zählers zu Inkrementierungen des zumindest einen Zählers vor. Derartige Einstellungen können nicht nur nach Ausgabe des Datenträgers an den Nutzer erfolgen, sondern bereits auch bei der Herstellung des Datenträgers.

Das Verhältnis kann in relativen und/oder absoluten Zahlen angegeben werden. D.h. es ist bezogen auf eine Zeitspanne, beispielsweise eine Stunde, einen Tag, eine Woche, etc., einstellbar, wie das Verhältnis von erfolgten Dekrementierungen zu erfolgten Inkrementierungen aussehen darf, ohne dass von einem Angriff auf das durch den Zähler gesicherte Kommandos geschlossen wird. Es kann auf diese Weise beispielsweise eingestellt werden, dass für jede beliebige Zeitspanne nicht mehr als zehn unmittelbar aufeinander folgende Dekrementierungen, d.h. ohne dass eine Inkrementierung diese Folge an einer Stelle unterbricht, erfolgen dürfen. Weiterhin kann beispielsweise eingestellt werden, dass innerhalb eines Jahres die Anzahl der Dekrementierungen jene der Inkrementierungen um eine vorgegebene absolute Anzahl, beispielsweise 200, oder eine relative Anzahl, beispielsweise 5%, übersteigen darf. Auf diese Weise können einerseits solche Muster aus Dekrementierungen und Inkrementierungen, welche sich bei bekannten Angriffen wahrscheinlich ergeben, zielsicher als nicht erlaubt eingestellt werden. Auf der anderen Seite ist es möglich, einen Verlauf des Zählers, wie er während einer gewöhnlichen Benutzung des Datenträgers zu erwarten ist, als zulässig einzustellen.

Oben angegebene Zeitspannen können einerseits im Sinne absoluter Zeitspannen verstanden werden. Dann umfasst der Datenträger vorzugsweise eine eigene Zeitmesseinrichtung, welche von einer separaten Stromquelle des Datenträgers, beispielsweise einer Batterie, gespeist wird. Alternativ können die vorgegebenen Zeitspannen auch eine reine Betriebszeit des Datenträgers angeben, d.h. die Zeit, in der der Datenträger, wenn er über keine eigene Energieversorgung verfügt, durch ein externes Lesegerät mit Energie versorgt und damit in Betrieb gesetzt wird. Eine geeignete Zeitmesseinrichtung des Datenträgers misst dann jeweils diese Betriebszeit und ist in der Lage, auch Gesamtbetriebszeiten zu speichern. Es ist auch möglich, dass einige Zeitspannen in absoluter Zeit gemessen werden, andere in reiner Betriebszeit des Datenträgers.

Gemäß einem weiteren Aspekt kann der zumindest eine Zähler auch abhängig von solchen Daten eingestellt werden, die von dem Datenträger selbst ermittelt werden. Diese Einstellung kann sich dabei sowohl auf einen konkreten Wert als auch auf eine Einstellung im komplexen Sinn, wie vorstehend beschrieben, beziehen. Diese Daten betreffen allgemein die Behandlung des Datenträgers, beispielsweise wie dieser während seiner Benutzung bewegt wird, welche sonstigen äußeren Kräfte auf den Datenträger einwirken, beispielsweise Druck- oder Biegekräfte, und dergleichen. Dazu kann ein Bewegungssensor oder entsprechende andere Sensoren, welche eine Krafteinwirkung auf den Datenträger erfassen können, in dem Datenträger vorgesehen sein. Die Idee hinter diesem Ansatz ist beispielsweise, dass ein Datenträger, welcher von einem Angreifer mittels vorgeschrittener technischer Mittel angegriffen wird, dabei in der Regel nicht, zumindest nicht zufällig, bewegt wird, sondern im Wesentlichen in einer Vorrichtung fixiert gehalten wird. Insofern kann schon eine kleine Anzahl von Dekrementierungen ohne dazwischen liegende Inkrementierungen bei gleichzeitiger Bewegungslosigkeit des Datenträgers auf einen Angriff hindeuten. Die gleiche Anzahl würde, während der Datenträger gemäß einer üblichen Bewegungscharakteristik bewegt werden würde, noch als unverdächtig angesehen werden.

Für den Fall, dass der zumindest eine Zähler den vorgegebenen Wertebereich verlässt oder das zulässige Verhältnis von Dekrementierungen zu Inkrementierungen nicht mehr erfüllt ist, d.h. in der Regel überschritten ist, wird der Datenträger oder zumindest das Kommando, welches von dem zumindest einen Zähler gesichert wird, deaktiviert. Es sind dann keine weiteren Angriffe auf den Datenträger möglich. Sensible Daten können nicht in unberechtigte Hände geraten. Da erfindungsgemäß ein irrtümliches Deaktivieren des Datenträgers oder Kommandos dadurch nahezu ausgeschlossen ist, dass der Zähler, um gelegentliche Fehlbedienungen oder technische Schwierigkeiten auszugleichen, nach Bedarf neu und geeignet eingestellt wird, kann bei einer Deaktivierung des Datenträgers mit sehr großer Wahrscheinlichkeit von einem Angriff auf den Datenträger ausgegangen werden.

Im Folgenden wird die vorliegende Erfindung mit Bezug auf die beiliegenden Zeichnungen beispielhaft erläutert. Darin zeigen:
- Figur 1: eine bevorzugte Ausführungsform eines erfindungsgemäßen Datenträgers und
- Figur 2: Schritte eines Verfahrens nach dem Stand der Technik zum Sichern eines Kommandos mittels eines Fehlbedienungszählers.

Ein portabler Datenträger 10, welcher hier als Chipkarte dargestellt ist, umfasst zwei verschiedene Datenkommunikationsschnittstellen 20, 22. Die erste Datenkommunikationsschnittstelle 20 ist als Kontaktfeld ausgebildet. Mittels dieser kann der Datenträger 10 über ein kontaktbehaftet arbeitendes Lesegerät, beispielsweise ein gewöhnliches Chipkartenterminal, kontaktiert werden. Die zweite Datenkommunikationsschnittstelle 22 dient der kontaktlosen Datenkommunikation und ist als Antennenspule ausgebildet. Die Versorgung des Datenträgers 10 mit Energie erfolgt in der jeweiligen Betriebsart, kontaktbehaftet oder kontaktlos, jeweils in bekannter Weise über die jeweilige Datenkommunikationsschnittstelle 20, 22. Es ist möglich, dass der Datenträger 10 zusätzlich eine eigene Energieversorgung umfasst, beispielsweise im Form einer Batterie (nicht gezeigt). Alternativ kann der Datenträger 10 auch nur für eine Betriebsart, kontaktbehaftet oder kontaktlos, eingerichtet sein.

Weiterhin umfasst der Datenträger 10 einen Prozessor (CPU 30), eine Reihe von Speichern 50, 60, 70 sowie einen Bewegungssensor 40.

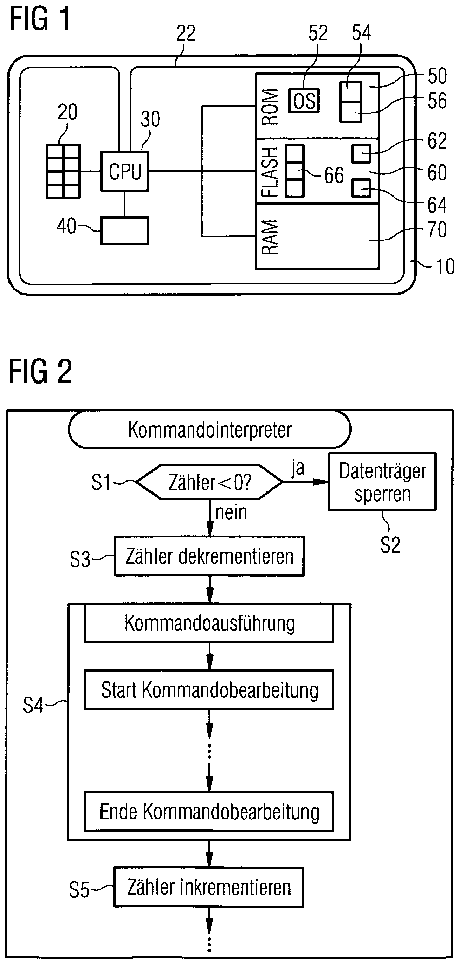

Ein nicht wiederbeschreibbarer, nichtflüchtiger ROM-Speicher 50 umfasst ein den Datenträger 10 steuerndes Betriebssystem (OS) 52, sowie Applikationen 54, 56 welche eingerichtet sind, die Ausführung sicherheitsrelevanter Kommandos auf dem Datenträger 10 zu unterstützen, beispielsweise bei einer Authentisierung, bei der Berechnung einer kryptographischen Funktion oder dergleichen. Das Betriebssystem 52, oder zumindest Teile davon, sowie die Applikationen 54, 56 können alternativ auch in dem wiederbeschreibbaren, nichtflüchtigen FLASH-Speicher 60 gespeichert sein. Darin sind weitere Applikationen 66, beispielsweise verschiedene Nutzeranwendungen, sowie zwei Zähler 62, 64 zum Sichern der sicherheitsrelevanten Kommandos 54, 56 gespeichert. Die Funktion der Zähler 62, 64 wird nachstehend mit Bezug auf Fig. 2 genauer beschrieben.

Der Bewegungssensor 40 ist eingerichtet, eine Bewegung des Datenträgers 10 zu erkennen und diesbezüglich erhobenen Daten an eine Steuereinheit des Datenträgers, beispielsweise den Prozessor 30 in Verbindung mit dem Betriebssystem 52, weiterzuleiten. Die Funktion des Bewegungssensors 40 und des damit erkannten Bewegungsmusters des Datenträgers 10 wird ebenfalls nachfolgend genauer beschrieben. Alternativ oder zusätzlich kann der Datenträger 10 weitere Sensoren (nicht gezeigt) umfassen, die beispielsweise äußere Krafteinwirkungen auf den Datenträger 10 erkennen lassen.

Mit Bezug auf Fig. 2 wird die gewöhnliche Verwendung eines Zählers 62, 64 zur Sicherung eines Kommandos kurz beschrieben. Wird das Kommando zur Ausführung an einen Kommandointerpreter übergeben, so wird in einem ersten Schritt S1 geprüft, ob ein dem Kommando zugeordneter Zähler 62, 64 noch oberhalb eines zulässigen, vorgegebenen Minimalwerts, beispielsweise "0", liegt. Ist dies nicht der Fall, so wird in einem zweiten Schritt der Datenträger 10 gesperrt. D.h. ein Abfallen des Zählers 62, 64 unter den Minimalwert hat eine Deaktivierung des Datenträgers 10 zur Folge. Es ist auch möglich, dass lediglich die Ausführung des Kommandos, welches durch den Zähler 62, 64 gesichert wird, gesperrt wird, der Datenträger 10 aber ansonsten betriebsbereit bleibt.

Liegt der Zähler 62, 64 noch innerhalb des zulässigen Wertebereichs, d.h. hier oberhalb des Minimalwerts, wird der Zähler 62, 64 noch vor Beginn der Ausführung des Kommandos in Schritt S3 dekrementiert, also in der Regel um den Wert "1" verringert. Im folgenden Schritt S4 wird dann das Kommando ausgeführt. Die Kommandoverarbeitung kann dabei mehrere Teilschritte umfassen, welche hier nicht gesondert aufgezeigt werden. Ist die Kommandoverarbeitung vollständig abgeschlossen, so wird der Zähler 62, 64 in Schritt S5 wieder inkrementiert, d.h. in der Regel um den Wert "1" erhöht. Der Zähler 62, 64 nimmt dadurch den Wert an, welchen er vor Beginn des letzten Aufrufs des Kommandointerpreters zum Ausführen des dem Zähler 62, 64 zugeordneten Kommandos eingenommen hatte. In dem Fall, dass die Verarbeitung des Kommandos allerdings derart gestört wird, dass die Verarbeitung des Kommandos abbricht, bevor das Ende der Kommandoverarbeitung erreicht wird, entfällt folglich auch das Inkrementieren des Zählers in Schritt S5. Dies gilt, da der vorgesehene Ablauf in dem Datenträger 10 vor Ausführung des Schritts S5 abgebrochen wird.

Ein solcher Abbruch des Ablaufs in dem Datenträger 10 kann auf einer Unterbrechung der Stromversorgung des Datenträgers 10 basieren. Diese kann unbeabsichtigt eintreten, beispielsweise wenn der Datenträger 10, betrieben in kontaktloser Betriebsart, zu weit von dem entsprechenden Lesegerät entfernt wird. Es ist auch möglich, dass, wenn der Datenträger 10 in kontaktbehafteter Betriebsart betrieben wird, ein Verschleiß oder eine Verschmutzung der Kontaktfläche 20 des Datenträgers 10 oder einer korrespondierenden Kontaktfläche eines Lesegeräts eine Unterbrechung der Stromversorgung zur Folge haben. Schließlich kann eine solche unbeabsichtigte Unterbrechung auch auf sonstigen technischen Defekten beruhen, wie sie gelegentlich auftreten.

Auf der anderen Seite kann eine Unterbrechung der Stromversorgung des Datenträgers 10 auch absichtlich herbeigeführt worden sein. Dies ist der Fall, wenn ein Angriff auf den Datenträger 10 bzw. auf das spezifische Kommando des Datenträgers 10 dadurch verschleiert werden soll, dass der Ablauf innerhalb des Datenträgers 10 durch Unterbrechung der Stromzufuhr unterbrochen wird, bevor datenträgerinterne Einrichtungen den Angriff erkennen können. Diese Art der Verschleierung eines Angriffs wird nun dadurch verhindert, dass nicht, wie es früher üblich war, ein Zähler 62, 64 erst dann dekrementiert wird, wenn ein Angriff positiv erkannt worden ist. Wie vorstehend beschrieben, wird ein entsprechender Zähler 62, 64 nun bereits vor der Ausführung des zu sichernden Kommandos, so zu sagen "präventiv", dekrementiert, und lediglich dass inkrementiert, wenn kein (erkennbarer) Angriff erfolgt ist.

Ein Abbruch des Ablaufs kann aber auch den Grund haben, dass datenträgerintern erkannt wird, dass keine Berechtigung zur Ausführung des Kommandos vorliegt. Dies gilt beispielsweise bei einem Authentisierungskommando, welches auf der Eingabe eines Geheimdatums basiert. Ist das eingegebene Geheimdatum nicht korrekt, wird das Authentisierungskommando vor dem Erreichen des Endes abgebrochen, also noch innerhalb des Schrittes S4. Der Zähler 62, 64 dient dann zum Zählen der erfolglosen Authentisierungsversuche. Ein derartiger Abbruch kann wiederum versehentlich herbeigeführt werden, wenn ein berechtigter Nutzer sich beispielsweise während der Eingabe des Geheimdatums lediglich "vertippt". Bei dem Versuch eines Angreifers hingegen, das Geheimdatum dadurch zu erraten, dass nacheinander sämtliche möglichen Geheimdaten eingegeben werden, wird der Zähler 62, 64 beabsichtigt bei jedem erfolglosen Versuch um eins dekrementiert. Genau diese Veränderungen des Zählers 62, 64 sind es, welche der Angreifer durch die vorstehend beschriebene Unterbrechung der Stromversorgung eigentlich verhindern möchte.

Im Falle eines wie auch immer bedingten Abbruchs des ordnungsgemäßen Ablaufs in dem Datenträger 10 während der Ausführung des Kommandos enthält der Zähler 62, 64 beim nächsten Aufruf des Kommandointerpreters deshalb einen um eins verringerten Wert - infolge der nicht ausgeführten Inkrementierung. Ausgehend von einem vorgegebenen Startwert des Zählers 62, 64 wird dieser somit stets um eins reduziert, wenn die Ausführung des Kommandos nicht vorschriftsmäßig das Ende erreicht. Fällt der Zähler 62, 64 dadurch unter den Minimalwert, wird der Datenträger 10, wie mit Bezug auf Schritt S2 erwähnt, deaktiviert. D.h. falls die Anzahl der Unterbrechungen der Stromversorgung des Datenträgers 10 und/oder die Anzahl sonstiger Abbruchgründe, welche jeweils während der Ausführung des Kommandos erfolgen, den Startwert übersteigt, wird der Datenträger 10 bzw. zumindest das entsprechende Kommando gesperrt.

Um eine unbeabsichtigte Sperrung des Datenträgers 10 zu verhindern, wäre es möglich, den Startwert des Zählers 62, 64 bei der Herstellung des Datenträgers entsprechend hoch einzustellen. Dies würde allerdings einem Angreifer die Möglichkeit geben, entsprechend viele Angriffe auf den Datenträger 10 starten zu können, bevor der Datenträger 10 deaktiviert wird. Mit jedem Angriff steigt aber die Wahrscheinlichkeit, dass sensible Daten den Datenträger 10 verlassen. Wird der Startwert bei der Herstellung des Datenträgers sehr niedrig eingestellt, ist dieser zwar gegen Angriffe von außen recht gut geschützt. Allerdings kann eine entsprechend kleine Anzahl von unbeabsichtigten Fehlbedienungen oder technischen Defekten eine unbeabsichtigte Abschaltung des Datenträgers 10 zur Folge haben.

Deswegen ist der Datenträger 10 derart eingerichtet, dass die Zähler 62, 64 mehrfach, auch noch nach der Ausgabe des Datenträgers 10 an einen Nutzer, neu eingestellt werden kann. Dies gilt sowohl für den Wert der Zählers 62, 64 selbst als auch für die Wertebereiche, innerhalb derer sich die Zähler 62, 64 während vorgegebener oder bei der Einstellung des Zählers 62, 64 ebenfalls definierbarer Zeitspannen bewegen darf. Die Berechtigung zur Einstellung der Zähler 62, 64 kann sowohl einem Nutzer als auch einer den Datenträger 10 ausgebenden Stelle gewährt werden. Dazu ist in der Regel jeweils eine Authentisierung gegenüber dem Datenträger 10 erforderlich. Schließlich kann die Einstellung auch durch den Datenträger 10 selbst erfolgen, beispielsweise abhängig von einem Verlauf der Zähler 62, 64 in der Vergangenheit oder anhängig von Daten des Bewegungssensors 40. Es ist weiterhin möglich, dass verschiedene der genannten Bedingungen gleichzeitig vorliegen müssen, damit eine Einstellung der Zähler 62, 64 erfolgen kann.

Die verschiedenen Zähler 62, 64 sind jeweils separat einstellbar. Eine Einstellung des einen Zählers 62, 64 ist unabhängig von der Einstellung des anderen Zählers 64, 62. Damit können verschiedene Kommandos spezifisch gesichert werden. Wenn beispielsweise der Zähler 62 ein Kommando sichert, welches im kontaktlosen Betriebsmodus ausgeführt wird, ist es sinnvoll, diesen Zähler 62 bezüglich des Startwertes höher einzustellen, als den Zähler 64, welcher ein entsprechenden Kommando, welches im kontaktbehafteten Betriebsmodus ausgeführt wird. Unbeabsichtigte Unterbrechungen der Stromversorgung sind im Zusammenhang des kontaktlosen Betriebsmodus öfter zu erwarten als im kontaktbehafteten Betriebsmodus.

Ein Nutzer des Datenträgers 10 kann eine Einstellung der Zähler 62, 64 durchführen, wenn er sich erfolgreich gegenüber dem Datenträger 10 authentisiert. Dies kann beispielsweise durch Eingabe eines Geheimdatums, beispielsweise einer PIN, erfolgen. Zur Eingabe eines solchen Geheimdatums kann der Datenträger 10 eine Eingabeeinrichtung (nicht gezeigt), beispielsweise eine Tastatur, aufweisen. Es ist auch möglich, dass zur Eingabe solcher Daten in den Datenträger 10 derselbe mit einem geeigneten Lesegerät mit Eingabeeinrichtung, beispielsweise einem Chipkartenterminal, über eine der Schnittstellen 20, 22 verbunden wird. Es ist möglich, dass der Nutzer dann die Einstellungen bezüglich des Zählers 62, 64 selbst vornehmen kann. Alternativ kann auch der Datenträger 10 die Einstellung der Zähler 62, 64 auf intern vorgegebene Werte zurücksetzen, sobald eine erfolgreiche Authentisierung des Nutzers vorliegt.

Die Einstellung der Zähler 62, 64 kann auch von einer den Datenträger 10 ausgebenden Stelle, beispielsweise einer Bank, durchgeführt werden. Dazu muss der Datenträger 10 mit dieser Stelle verbunden werden. Dies kann beispielsweise über ein geeignetes Lesegerät geschehen, welches seinerseits, beispielsweise über das Internet, mit der ausgebenden Stelle verbunden ist. Um eine Berechtigung zur Einstellung der Zähler 62, 64 zu erhalten, muss sich die ausgebende Stelle in bekannter Weise gegenüber dem Datenträger 10 authentisieren. Danach ist eine Einstellung der Zähler 62, 64 gemäß den Vorgaben der ausgebenden Stelle möglich. Auch in diesem Fall kann die Einstellung des Zählers, nach erfolgreicher Authentisierung der ausgebenden Stelle, durch den Datenträger 10 selbst vorgenommen werden. Der Datenträger 10 kann dies beispielsweise jeweils nach Ablauf eines vorgegebenen Zeitintervalls vorsehen. Den Ablauf des Zeitintervalls kann der Datenträger 10 einer internen Zeitmesseinrichtung oder einem von der ausgebenden Stelle erhaltenen, zertifizierten Zeitstempel entnehmen.

Wie erwähnt können die Zähler 62, 64 im einfachsten Fall auf einen vorgegebenen oder neu definierten Startwert zurückgesetzt werden. Dies geschieht dann, wenn ein Zähler 62, 64 im Laufe des Betriebs des Datenträgers 10 aufgrund unbeabsichtigter Fehlbenutzung oder technischer Umstände derart dekrementiert worden ist, dass sein aktueller Wert nahe dem Minimalwert liegt, mithin eine Deaktivierung des Datenträgers 10 infolge einer kleinen Anzahl weiterer Dekrementierungen droht. Wie erwähnt, werden verschiedene Zähler abhängig von zu sichernden Kommandos und dem Betriebsmodus, in dem das Kommando ausgeführt wird, auf verschiedene Startwerte eingestellt.

Es ist aber auch möglich, komplexere Vorgaben hinsichtlich der Zähler 62, 64 einzustellen. Dabei ist es möglich vorzugeben, wie sich die Zähler 62, 64 im Laufe des Betriebs des Datenträgers 10 verändern dürfen, ohne dass darin ein Angriff auf den Datenträger 10 erkannt wird. Derartige Einstellungen können nicht nur nach Ausgabe des Datenträgers 10 an den Nutzer erfolgen, sondern bereits auch bei der Herstellung des Datenträgers 10. Eine Einstellung in diesem Sinne dient in erster Linie dazu, solche Verlaufsmuster eines Zählers 62, 64, welche in der Regel bei einer gewöhnlichen Nutzung des Datenträgers 10 auftreten, von solchen Mustern zu unterscheiden, die auf einen Angriff auf den Datenträger 10 hindeuten. Bei einer gewöhnlichen Nutzung kommt es beispielsweise vor, dass gelegentlich zwei, selten drei oder mehr Dekrementierungen eines Zähler 62, 64 aufeinander folgen, bevor wieder eine Inkrementierung desselben stattfindet. Dies ist auf gelegentliche Fehlbedienungen des Nutzers und gelegentliche technische Defekte zurückzuführen. Im Gegensatz dazu zeichnet sich das Muster von Zählerverläufen, welches durch einen Angriff hervorgerufen wird, meist dadurch aus, dass in vergleichsweise kurzer Zeit viele Dekrementierungen ohne dazwischen liegende Inkrementierungen zu verzeichnen sind. Eine geeignete Einstellung der Zähler 62, 64 kann solche unterschiedlichen Muster erkennbar machen.

Für eine große Zeitspanne, welche beispielsweise der durchschnittlichen Nutzungsdauer des Datenträgers 10 entspricht, kann vorgegeben werden, dass die Anzahl der Dekrementierungen diejenige der Inkrementierungen um einen erheblichen Wert, beispielsweise "1000", übersteigen darf. Dies entspricht der Annahme, dass während der Betriebszeit des Datenträgers 10 nicht mehr als insgesamt 1000 Fehlbedienungen und technische Defekte zu erwarten sind. Die Anzahl der zulässigen Fehlbedienungen innerhalb eines kürzeren Zeitraums, beispielsweise einer Woche, einem Tag, einer Stunde, werden dementsprechend niedriger eingestellt. Dabei entspricht eine zulässige Fehlbedienung dem Fall, dass zwei Dekrementierungen eines Zählers direkt aufeinander folgen. Folgen viele Dekrementierungen direkt aufeinander, deutet dies auf einen Angriff hin, beispielsweise wenn eine PIN des Datenträgers durch Enumeration aller möglichen PINs erraten werden soll. Derartige Angriffe können mittels der beschriebenen Einstellungen leicht erkannt und verhindert werden, beispielsweise bereits dadurch, dass mehr als 10 Fehlerbedienungen innerhalb einer Stunde als nicht zulässig gelten.

Die Einstellung der Zähler 62, 64 kann schließlich abhängig von solchen Daten durchgeführt werden, welche der Datenträger 10 selbst mittels des Bewegungssensors 40 oder anderer interner Messeinrichtungen aufnimmt. Erstgenannte geben Information über ein Bewegungsmuster des Datenträgers 10. Andere Messwerte sind beispielsweise Stromschwankungen im Datenträger aufgrund von Kontaktierungsschwierigkeiten oder dergleichen. Bestimmte Bewegungsmuster deuten auf einen gewöhnlichen Gebrauch des Datenträgers 10 hin. Dies sind Muster, welche eine im Wesentlichen zufällige Bewegung zeigen. Dabei sind die Bewegungsmuster mit den zeitlich parallel dazu erkennbaren Veränderungen der Zähler 62, 64 zu beachten. Viele aufeinander folgende Veränderungen der Zähler 62, 64 ohne eine erkennbare, insbesondere zufällige Bewegung des Datenträgers 10 zwischen einzelnen Dekrementierungen/Inkrementierungen des Zählers 62, 64 deuten auf einen Angriff hin. Dabei wird der Datenträger 62, 64 in der Regel in einer geeigneten Vorrichtung fixiert. Demnach werden zulässige Verhältnisse zwischen Dekrementierungen und Inkrementierungen eines Zählers 62, 64 abhängig von dem Bewegungsmuster des Datenträgers 10 eingestellt. Bei geringer Bewegung, insbesondere bei kaum erkennbarer zufälliger Bewegung, werden strikte Einstellungen vorgenommen, d.h. die zulässigen Verhältnisse werden dahingehend angepasst, dass nur noch relativ wenige Dekrementierungen ohne dazwischen liegende Inkrementierungen erlaubt sind. Bei erkennbar "normaler" Bewegung des Datenträgers 10 können entsprechende Einstellungen wieder gelockert werden.

Schließlich kann anhand datenträgerintern erhobener Messwerte versucht werden, insbesondere mit Blick auf Angriffe, welche eine Unterbrechung der Stromversorgung des Datenträgers 10 hervorrufen, solche Angriffe von unbeabsichtigten Fehlbedienungen und technischen Defekten zu unterscheiden. Eine Unterbrechung der Stromversorgung, welche unmittelbar einer Spannungsschwankung folgt, könnte auf Kontaktierungsschwierigkeiten, beispielsweise aufgrund mangelhafter Kontaktflächen, schließen lassen und weniger auf einen gezielten Angriff. Ähnliches gilt für eine Unterrechnung, welche unmittelbar auf eine heftige Bewegung des Datenträgers 10 folgt, mit welcher derselbe beispielsweise versehentlich aus dem Lesefeld eines Kontaktloslesegeräts entfernt worden ist.

## Patentansprüche

1. Verfahren in einem portablen Datenträger (10), wobei ein vorgegebenes Kommando (54; 56) durch den Datenträger (10) nur dann ausgeführt wird, wenn zumindest ein Zähler (62; 64) des Datenträgers in einem vorgegebenen Wertebereich liegt (S1), und wobei der zumindest eine Zähler (62; 64) vor einer Ausführung des Kommandos (54; 56) dekrementiert wird (S3) und lediglich dann inkrementiert wird (S5), wenn das Kommando (54; 56) ohne Unterbrechung ausgeführt worden ist (S4), **dadurch gekennzeichnet, dass** der zumindest eine Zähler (62; 64) nach einer Ausgabe des Datenträgers (10) an einen Nutzer eingestellt wird, wobei neben der erstmaligen Einstellung des Zählers (62, 64) bei der Herstellung des Datenträgers (10) die Möglichkeit der erneuten Einstellung des Zählers (62, 64) besteht, wenn der Datenträger (10) bereits in Betrieb genommen worden ist, wobei ein Einstellen des Zählers (62, 64) sowohl ein Einstellen eines Wertes des Zählers (62, 64) als auch ein Einstellen eines zulässigen Wertebereichs des Zählers (62, 64) sowie eines zulässigen Verlaufsmusters des Zählers (62, 64) bezeichnet.

2. Verfahren nach Anspruch 1, **dadurch gekennzeichnet, dass** der zumindest eine Zähler (62; 64) nach einer erfolgreichen Authentisierung gegenüber dem Datenträger (10) eingestellt wird.

3. Verfahren nach Anspruch 2, **dadurch gekennzeichnet, dass** sich ein Nutzer und/oder eine den Datenträger (10) ausgebende Stelle gegenüber dem Datenträger (10) authentisieren.

4. Verfahren nach einem der Ansprüche 1 bis 3, **dadurch gekennzeichnet, dass** die Einstellung des zumindest einen Zählers (62; 64) durch eine den Datenträger (10) ausgebende Stelle durchgeführt wird.

5. Verfahren nach einem der Ansprüche 1 bis 4, **dadurch gekennzeichnet, dass** die Einstellung des zumindest einen Zählers (62; 64) durch einen Nutzer des Datenträgers (10) durchgeführt wird.

6. Verfahren nach einem der Ansprüche 1 bis 5, **dadurch gekennzeichnet, dass** mehr als ein Zähler (62; 64) vorgesehen ist, wobei ein erster Zähler (62) zum Sichern eines ersten Kommandos (54) verwendet wird und ein zweiter Zähler (64) zum Sichern eines zweiten Kommandos (56) verwendet wird.

7. Verfahren nach Anspruch 6, **dadurch gekennzeichnet, dass** der erste Zähler (62) ein Kommando (54) sichert, welches in einem ersten Betriebsmodus des Datenträgers (10) ausgeführt wird, insbesondere in einem kontaktbehafteten Betriebsmodus, und der zweite Zähler (64) ein Kommando sichert (56), welches in einem von dem ersten Betriebsmodus verschiedenen zweiten Betriebsmodus ausgeführt wird, insbesondere in einem kontaktlosen Betriebsmodus.

8. Verfahren nach einem der Ansprüche 1 bis 7, **dadurch gekennzeichnet, dass** der zumindest eine Zähler (62; 64) bezüglich eines Startwertes eingestellt wird, ausgehend von welchem der zumindest eine Zähler (62; 64) nach der Einstellung vor einer Ausführung des vorgegebenen Kommandos (54; 56) dekrementiert wird.

9. Verfahren nach einem der Ansprüche 1 bis 8, **dadurch gekennzeichnet, dass** der zumindest eine Zähler (62; 64) bezüglich eines für eine vorgegebene Zeitspanne zulässigen Verhältnisses von Dekrementierungen des zumindest einen Zählers (62; 64) zu Inkrementierungen des zumindest einen Zählers (62; 64) eingestellt wird.

10. Verfahren nach einem der Ansprüche 1 bis 9, **dadurch gekennzeichnet, dass** der zumindest eine Zähler (62; 64) durch den Datenträger (10) abhängig von solchen Daten eingestellt wird, welche der Datenträger (10) selbst mittels eines Sensors, insbesondere mittels eines Bewegungssensors (40), ermittelt, wobei eine kleine Anzahl von Dekrementierungen ohne dazwischen liegende Inkrementierungen bei gleichzeitiger Bewegungslosigkeit des Datenträgers (10) auf einen Angriff hindeutet.

11. Verfahren nach einen der Ansprüche 1 bis 10, **dadurch gekennzeichnet, dass** der Datenträger (10) oder zumindest das Kommando (54; 56), welches von dem zumindest einen Zähler (62; 64) gesichert wird, deaktiviert wird, wenn der zumindest eine Zähler (62; 64) den vorgegebenen Wertebereich verlässt.

12. Portabler Datenträger (10), umfassend zumindest einen Speicher (50; 60; 70) und einen Prozessor (30), welcher eingerichtet ist, ein in dem Speicher (50; 60; 70) gespeichertes Kommando (54; 56) auszuführen, sowie zumindest einen Zähler (62; 64) zum Sichern des Kommandos (54; 56), wobei der Datenträger (10) eingerichtet ist, das Kommando (54; 56) nur dann auszuführen, wenn der zumindest eine Zähler (62; 64) in einem vorgegebenen Wertebereich liegt, und eingerichtet ist, den zumindest einen Zähler (62; 64) vor einer Ausführung des Kommandos (54; 56) zu dekrementieren und lediglich dann zu inkrementieren, wenn das Kommando (54; 56) ohne Unterbrechung ausgeführt worden ist, **dadurch gekennzeichnet, dass** der zumindest eine Zähler (62; 64) eingerichtet ist, nach einer Ausgabe des Datenträgers (10) an einen Nutzer einstellbar zu sein, wobei neben der erstmaligen Einstellung des Zählers (62, 64) bei der Herstellung des Datenträgers (10) die Möglichkeit der erneuten Einstellung des Zählers (62, 64) besteht, wenn der Datenträger (10) bereits in Betrieb genommen worden ist, wobei ein Einstellen des Zählers (62, 64) sowohl ein Einstellen eines Wertes des Zählers (62, 64) als auch ein Einstellen eines zulässigen Wertebereichs des Zählers (62, 64) sowie eines zulässigen Verlaufsmusters des Zählers (62, 64) bezeichnet.

13. Datenträger (10) nach Anspruch 12, **dadurch gekennzeichnet, dass** der Datenträger (10) eingerichtet ist, ein Verfahren nach einem der Ansprüche 1 bis 9 auszuführen.

14. Datenträger (10) nach Anspruch 12 oder 13, **gekennzeichnet durch** einen Sensor des Datenträgers (10), insbesondere einen Bewegungssensor (40), zum Erkennen von äußeren Einwirkungen auf den Datenträger (10), insbesondere zum Erkennen einer Bewegung des Datenträgers (10), und **dadurch,** dass der Datenträger (10) eingerichtet ist, den zumindest einen Zähler (62; 64) abhängig von solchen Daten einzustellen, welche mittels des Sensors ermittelt werden.

## Claims

1. A method in a portable data carrier (10), wherein a specified command (54; 56) is executed by the data carrier (10) only when at least one counter (62; 64) of the data carrier lies in a specified values range (S1), and wherein the at least one counter (62; 64) is decremented (S3) before an execution of the command (54; 56) and is incremented (S5) only when the command (54; 56) has been executed without interruption (S4), **characterized in that** the at least one counter (62; 64) is set after an issuance of the data carrier (10) to a user, wherein besides the initial setting of the counter (62, 64) upon the manufacture of the data carrier (10) there is the possibility of newly setting the counter (62, 64) when the data carrier has already been put into operation, wherein a setting of the counter (62, 64) designates both a setting of a value of the counter (62, 64) and a setting of a permissible values range of the counter (62, 64) as well as of a permissible progression pattern of the counter (62, 64).

2. The method according to claim 1, **characterized in that** the at least one counter (62; 64) is set after a successful authentication to the data carrier (10).

3. The method according to claim 2, **characterized in that** a user and/or a body issuing the data carrier (10) authenticates himself/ itself to the data carrier (10).

4. The method according to any of claims 1 to 3, **characterized in that** the setting of the at least one counter (62; 64) is carried out by a body issuing the data carrier (10).

5. The method according to any of claims 1 to 4, **characterized in that** the setting of the at least one counter (62; 64) is carried out by a user of the data carrier (10).

6. The method according to any of claims 1 to 5, **characterized in that** more than one counter (62; 64) is provided, wherein a first counter (62) is employed for safeguarding a first command (54) and a second counter (64) is employed for safeguarding a second command (56).

7. The method according to claim 6, **characterized in that** the first counter (62) safeguards a command (54) that is executed in a first operating mode of the data carrier (10), in particular in a contact-type operating mode, and the second counter (64) safeguards a command (56) that is executed in a second operating mode different from the first operating mode, in particular in a contactless operating mode.

8. The method according to any of claims 1 to 7, **characterized in that** the at least one counter (62; 64) is set with regard to an initial value starting out from which the at least one counter (62; 64) is decremented after the setting before an execution of the specified command (54; 56).

9. The method according to any of claims 1 to 8, **characterized in that** the at least one counter (62; 64) is set with regard to a ratio of decrementings of the at least one counter (62; 64) to incrementings of the at least one counter (62; 64), said ratio being permissible for a specified time span.

10. The method according to any of claims 1 to 9, **characterized in that** the at least one counter (62; 64) is set by the data carrier (10) in dependence on those data that the data carrier (10) ascertains itself by means of a sensor, in particular by means of a motion sensor (40), wherein a small number of decrementings without any intermediate incrementings accompanied by immobility of the data carrier (10) points to an attack.

11. The method according to any of claims 1 to 10, **characterized in that** the data carrier (10) or at least the command (54; 56) that is safeguarded by the at least one counter (62; 64) is deactivated when the at least one counter (62; 64) leaves the specified values range.

12. A portable data carrier (10) comprising at least one memory (50; 60; 70) and a processor (30) which is adapted to execute a command (54; 56) stored in the memory (50; 60; 70), as well as at least one counter (62; 64) for safeguarding the command (54; 56), wherein the data carrier (10) is adapted to execute the command (54; 56) only when the at least one counter (62; 64) lies in a specified values range, and is adapted to decrement the at least one counter (62; 64) before an execution of the command (54; 56) and to increment it only when the command (54; 56) has been executed without interruption, **characterized in that** the at least one counter (62; 64) is adapted to be settable after an issuance of the data carrier (10) to a user, wherein besides the initial setting of the counter (62, 64) upon the manufacture of the data carrier (10) there is the possibility of newly setting the counter (62, 64) when the data carrier has already been put into operation, wherein a setting of the counter (62, 64) designates both a setting of a value of the counter (62, 64) and a setting of a permissible values range of the counter (62, 64) as well as of a permissible progression pattern of the counter (62, 64).

13. The data carrier (10) according to claim 12, **characterized in that** the data carrier (10) is adapted to execute a method according to any of claims 1 to 9.

14. The data carrier (10) according to claim 12 or 13, **characterized by** a sensor of the data carrier (10), in particular a motion sensor (40), for recognizing external influences on the data carrier (10), in particular for recognizing a motion of the data carrier (10), **and in that** the data carrier (10) is adapted to set the at least one counter (62; 64) in dependence on those data that are ascertained by means of the sensor.

## Revendications

1. Procédé dans un support de données (10) portable, cependant qu'une instruction (54; 56) prédéterminée n'est exécutée par le support de données (10) que quand au moins un compteur (62; 64) du support de données se situe (S1) dans une plage de valeurs prédéterminée, et cependant que le au moins un compteur (62; 64) est, avant une exécution de l'instruction (54; 56), décrémenté (S3), et est seulement incrémenté (S5) quand l'instruction (54; 56) a été exécutée (S4) sans interruption, **caractérisé en ce que** le au moins un compteur (62; 64) est, après une délivrance du support de données (10) à un utilisateur, réglé, cependant que, outre le réglage initial du compteur (62; 64) lors de la fabrication du support de données (10), il y la possibilité du nouveau réglage du compteur (62; 64) quand le support de données (10) a déjà été mis en service, cependant qu'un réglage du compteur (62; 64) désigne tant un réglage d'une valeur du compteur (62; 64) qu'un réglage d'une plage de valeurs du compteur (62; 64) admissible et qu'un modèle admissible de progression du compteur (62; 64).

2. Procédé selon la revendication 1, **caractérisé en ce que** le au moins un compteur (62; 64) est réglé après une authentification aboutie vis-à-vis du support de données (10).

3. Procédé selon la revendication 2, **caractérisé en ce qu**'un utilisateur et/ou un poste délivrant le support de données (10) s'authentifient vis-à-vis du support de données (10).

4. Procédé selon une des revendications de 1 à 3, **caractérisé en ce que** le réglage du au moins un compteur (62; 64) est effectué par un poste délivrant le support de données (10).

5. Procédé selon une des revendications de 1 à 4, **caractérisé en ce que** le réglage du au moins un compteur (62; 64) est effectué par un utilisateur du support de données (10).

6. Procédé selon une des revendications de 1 à 5, **caractérisé en ce que** plus d'un compteur (62; 64) est prévu, cependant qu'un premier compteur (62) est utilisé pour sécuriser une première instruction (54), et qu'un deuxième compteur (64) est utilisé pour sécuriser une deuxième instruction (56).

7. Procédé selon la revendication 6, **caractérisé en ce que** le premier compteur (62) sécurise une instruction (54) qui est exécutée dans un premier mode de fonctionnement du support de données (10), en particulier dans un mode de fonctionnement avec contact, et que le deuxième compteur (64) sécurise une instruction (56) qui est exécutée dans un deuxième mode de fonctionnement différent du premier mode de fonctionnement, en particulier dans un mode de fonctionnement sans contact.

8. Procédé selon une des revendications de 1 à 7, **caractérisé en ce que** le au moins un compteur (62; 64) est réglé quant à une valeur de départ à partir de laquelle le au moins un compteur (62; 64) est, après le réglage, décrémenté avant une exécution de l'instruction (54; 56) prescrite.

9. Procédé selon une des revendications de 1 à 8, **caractérisé en ce que** le au moins un compteur (62; 64) est réglé quant à un rapport, admissible pour un intervalle de temps prédéterminé, entre des décrémentations du au moins un compteur (62; 64) et des incrémentations du au moins un compteur (62; 64).

10. Procédé selon une des revendications de 1 à 9, **caractérisé en ce que** le au moins un compteur (62; 64) est réglé par le support de données (10) en fonction de données que le support de données (10) repère lui-même au moyen d'un capteur, en particulier au moyen d'un capteur de mouvement (40), cependant qu'un faible nombre de décrémentations sans incrémentations entre elles alors que le support de données (10) est en même temps en immobilité porte à penser qu'il y a eu une attaque.

11. Procédé selon une des revendications de 1 à 10, **caractérisé en ce que** le support de données (10) ou du moins l'instruction (54; 56) sécurisée par le au moins un compteur (62; 64) est désactivé(e) quand le au moins un compteur (62; 64) quitte la plage de valeurs prédéterminée.

12. Support de données (10) portable comprenant au moins une mémoire (50; 60; 70) et un processeur (30) qui est conçu pour exécuter une instruction (54; 56) mémorisée dans la mémoire (50; 60; 70), ainsi qu'au moins un compteur (62; 64) destiné à sécuriser l'instruction (54; 56), cependant que le support de données (10) est conçu pour n'exécuter l'instruction (54; 56) que quand le au moins un compteur (62; 64) se situe dans une une plage de valeurs prédéterminée, et est conçu pour décrémenter le au moins un compteur (62; 64) avant une exécution de l'instruction (54; 56) et pour ne l'incrémenter que quand l'instruction (54; 56) a été exécutée sans interruption, **caractérisé en ce que** le au moins un compteur (62; 64) est conçu pour pouvoir être réglé après une délivrance du support de données (10) à un utilisateur, cependant que, outre le réglage initial du compteur (62; 64) lors de la fabrication du support de données (10), il y la possibilité du nouveau réglage du compteur (62; 64) quand le support de données (10) a déjà été mis en service, cependant qu'un réglage du compteur (62; 64) désigne tant un réglage d'une valeur du compteur (62; 64) qu'un réglage d'une plage de valeurs du compteur (62; 64) admissible et qu'un modèle admissible de progression du compteur (62; 64).

13. Support de données (10) selon la revendications 12, **caractérisé en ce que** le support de données (10) est conçu pour exécuter un procédé selon une des revendications de 1 à 9.

14. Support de données (10) selon la revendications 12 ou 13, **caractérisé par** un capteur du support de données (10), en particulier par un capteur de mouvement (40), destiné au dépistage d'influences extérieures sur le support de données (10), en particulier au dépistage d'un mouvement du support de données (10), et **en ce que** le support de données (10) est conçu pour régler le au moins un compteur (62; 64) en fonction de données repérées au moyen du capteur.
